(19) Europäisches Patentamt
European Patent Office
Office européen des brevets

(11) **EP 4 650 031 A1**

(12) **EUROPEAN PATENT APPLICATION**

(43) Date of publication:
**19.11.2025  Bulletin 2025/47**

(21) Application number: **24176254.1**

(22) Date of filing: **16.05.2024**

(51) International Patent Classification (IPC):
***B01D 53/04*** *(2006.01)*      ***B01D 53/047*** *(2006.01)*

(52) Cooperative Patent Classification (CPC):
**B01D 53/0462; B01D 53/047;** B01D 2253/102;
B01D 2253/106; B01D 2253/108; B01D 2253/112;
B01D 2253/204; B01D 2253/25; B01D 2257/504;
B01D 2258/05; B01D 2259/40043;
B01D 2259/40056; B01D 2259/40086

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicants:
• **Cornelissen Beheer B.V.
7411 PL Deventer (NL)**
• **UNIVERSITEIT TWENTE
7522 NB Enschede (NL)**

(72) Inventors:
• **VAN PRUISSEN, Gijsbrecht Willem Philippus
7411 PL Deventer (NL)**

• **AALDERINK, Geurt
7411 PL Deventer (NL)**
• **ESKES, Johannes Hendrikus
7411 PL Deventer (NL)**
• **CORNELISSEN, Reinerus Louwrentius
7411 PL Deventer (NL)**
• **BRILMAN, Derk Willem Frederik
7522 NB Enschede (NL)**
• **KLOMP, Jasper
7522 NB Enschede (NL)**
• **SRINIVAS, Abhinav
7522 NB Enschede (NL)**

(74) Representative: **Arnold & Siedsma
Bezuidenhoutseweg 57
2594 AC The Hague (NL)**

(54) **PROCESS AND DEVICE FOR SEPARATION OF CO2 FROM A GAS MIXTURE**

(57)      The invention concerns a swing adsorption process for separating $CO_2$ from a gas feed mixture, wherein the process comprises the following order of steps:
(a) providing a tubular vessel (1) wherein at least one tubular vessel part (1c) comprises a particulate solid adsorbent material (1d) selective for adsorbing $CO_2$;
(b) providing a gas feed mixture (2) comprising $CO_2$;
(c) introducing the gas feed mixture (2) into the vessel (1) and subjecting the gas feed mixture (2) to an adsorption step to provide a gas mixture depleted in $CO_2$ (3);
(d) releasing the gas mixture depleted in $CO_2$ (3) from vessel (1);
(e) introducing an inert gaseous purge (4) into the vessel (1) and subjecting the particulate solid adsorbent material (1d) to a desorption step to provide an inert gaseous purge enriched in $CO_2$ (5); and
(f) releasing the inert gaseous purge enriched in $CO_2$ (5) from the vessel (1);

wherein a mixture comprising:
• the particulate solid adsorbent material (1d); and
• an inert solid material (1e) having an isobaric volumetric heat capacity at 25 °C of at least 2 $J \cdot cm^{-3} \cdot K^{-1}$ and a thermal conductivity at 25 °C of at least 10 $W \cdot m^{-1} \cdot K^{-1}$, substantially fills at least one tubular vessel part (1c).

The invention further concerns a tubular vessel (1) being divided into two or more tubular vessel parts (1c), wherein the tubular vessel (1) has a feed input end (1a) and a product output end (1b), wherein a mixture comprising:
• a particulate solid adsorbent material (1d) selective for adsorbing $CO_2$; and
• an inert solid material (1e) having an isobaric volumetric heat capacity at 25 °C of at least 2 $J \cdot cm^{-3} \cdot K^{-1}$ and a thermal conductivity at 25 °C of at least 10 $W \cdot m^{-1} \cdot K^{-1}$, substantially fills at least one tubular vessel part (1c).

EP 4 650 031 A1

**Description**

**TECHNICAL FIELD OF THE INVENTION**

The present invention concerns a swing adsorption process for separating $CO_2$ from a gas feed mixture, preferably from biogas. The present invention further concerns a device for use in that process.

**BACKGROUND OF THE INVENTION**

Mixtures of carbon dioxide and methane are a valuable source of methane. Untreated biogas, for example the product of anaerobic digestion of waste sludge, organic waste, manure or other organic products, but also the products of gasification processes, consists primarily of methane ($CH_4$) and typically 30-50% carbon dioxide ($CO_2$) gas.

By separating the carbon dioxide methane from the biogas, a (sufficiently) pure form of methane is obtained known as biomethane or green gas that can function as a sustainable replacement for the use of (fossil) natural gas. This process is called upgrading of biogas.

Many methods for upgrading of biogas are already known. A first technique concerns selective absorption of $CO_2$ from the biogas using a liquid absorption medium. See in this regard for example US2009/0199709A1, WO2015/053619A1, US2010/0288126A1 and US2013/0118350A1, wherein a $CO_2$-containing gas, e.g. biogas, is contacted with an aqueous amine solution or suspension to selectively absorb $CO_2$. The loaded liquid absorption medium is regenerated by desorbing the $CO_2$ using heating, depressurization to a lower pressure or stripping. After the regeneration process, the liquid absorption medium can be used again. A disadvantage of these methods, however, is that the removal of $CO_2$ by absorption and subsequent desorption requires a relatively large amount of energy.

Processes using selective adsorption of $CO_2$ from a $CO_2$-containing gas using porous solid sorbents are also known. In these processes, the $CO_2$ adsorption is typically achieved by swing adsorption. Swing adsorption processes have an adsorption step in which a feed mixture (typically in the gas phase) is flowed over an adsorbent that preferentially adsorbs a more readily adsorbed component relative to a less readily adsorbed component. Desorption takes place by changing for example temperature and/or pressure.

Examples are Pressure Swing Adsorption (PSA), Temperature Swing Adsorption (TSA), Vacuum Swing Adsorption (VSA), Vacuum Pressure Swing Adsorption (VPSA) and Concentration Swing Adsorption (CSA) processes. These processes are all similar in alternating between two main process steps: adsorption of $CO_2$ on and into a porous solid sorbent and desorption to regenerate the porous solid sorbent. The major difference between these processes is in the method that is used for regenerating the porous solid sorbent. In PSA, VSA and PVSA, the adsorbent is regenerated by lowering the pressure to atmospheric (PSA) or lower (VSA/PVSA) conditions, in TSA, the adsorbent is regenerated by increasing the temperature and in CSA (used in liquid separations), the adsorbent is regenerated by purging the adsorption column with a desorbent liquid.

WO2017/087385A1 discloses different swing adsorption processes for separating $CO_2$ from a gas feed mixture using a solid sorbent, more particularly specific zeolite sorbents. Examples of the swing adsorption processes are PSA, Pressure Temperature Swing Adsorption (PTSA), VSA, Vacuum Temperature Swing Adsorption (VSTA), TSA, Partial Pressure Swing Adsorption (PPSA), Partial Pressure Temperature Swing Adsorption (PPTSA) and Displacement Desorption Swing Adsorption (DDSA). In PPSA, the adsorbent is regenerated with a purge. In DDSA, the gas in the purge is used to displace the $CO_2$ on the solid sorbent during regeneration. It is described that the purge gas may comprise an inert gas, such as nitrogen. Examples of $CO_2$-containing gas feed mixtures disclosed in WO2017/087385A1 are natural gas, syngas and flue gas.

The separation processes currently known in the field consume a lot of energy, either in the form of heat, pressure, or electricity or a combination thereof.

Perry's Chemical Engineers' Handbook, 9th Edition, D.W. Green and M.Z. Southard, McGraw Hill Education, page 16-43, discloses a purge/concentration swing adsorption process wherein desorption takes place at the same temperature and total pressure as adsorption. Desorption is accomplished by partial-pressure reduction using an inert gas purge. It is described that the purge cycles operate adiabatically at nearly constant inlet temperature and require no heating or cooling steps and that the heat of adsorption remaining in the adsorbent is used to supply the heat of desorption. In inert-purge desorption cycles, *'inert'* refers to the fact that the purge gas is not adsorbed significantly at the cycle conditions. It is further described that inert purging desorbs the adsorbate solely by partial pressure reduction.

The present inventors have established that, unlike the disclosure in Perry's Chemical Engineers' Handbook, it is not possible to operate an adsorption-desorption sequence at the same temperature and total pressure purely adiabatically at nearly constant inlet temperature and without any heating or cooling steps. At nearly constant inlet temperature and without any heating or cooling steps, the heat of adsorption remaining in the adsorbent is typically not enough to supply the heat of desorption needed and to result in an overall negative Gibbs free energy of the adsorption-desorption sequence.

It is an object of the invention to provide an improved process for the separation of $CO_2$ from a gas mixture, such as biogas, preferably a more efficient process, more preferably a more energy efficient process. It is a further object of the invention to provide a novel, preferably energy-efficient, process for the separation of $CO_2$ from a gas mixture, such as biogas. It is another object of the invention to provide a novel process for the separation of $CO_2$ from a gas mixture, such as biogas, that to an increased extent depends on the Gibbs free energy of mixing as the driving force for the separation process. Moreover, it is an object of the invention to provide a device for use in that process.

**SUMMARY OF THE INVENTION**

The invention presented herein describes a new separation technique for the separation of $CO_2$ from a gas mixture that to a large extent depends on the Gibbs free energy of mixing as the driving force for the separation process. For mixing/demixing of ideal gases, the Gibbs free energy of mixing ($\Delta G_{mix}$) at constant temperature and pressure is proportional to the entropy of mixing ($\Delta S_{mix}$):

$$\Delta G_{\mathrm{mix}} = -T\Delta S_{\mathrm{mix}}$$

For mixing of ideal gases at constant temperature and pressure, $\Delta S_{mix}$ is always positive and $\Delta G_{mix}$ is always negative, meaning that this mixing is a spontaneous process that does not require additional energy to go to completion. In the process according to the invention, gases are not directly mixed but $CO_2$ is first selectively removed from a gas feed also comprising other gaseous components and this $CO_2$ is subsequently mixed with an inert gas purge. If one considers a process wherein $CO_2$ is selectively removed from a gas feed further only comprising $CH_4$ using a inert gaseous purge comprising for example $CO_2$ and other *'gaseous purge molecules'*, the Gibbs free energy of a process wherein x moles of $CO_2$ are selectively demixed from the gas feed and subsequently mixed with the inert gaseous purge ($\Delta G_{mix,sel}$) can be expressed as follows (wherein $n$ represents the total number of moles, $n_{purge\neq CO2}$ represents the total number of moles of *'gaseous purge molecules'* other than $CO_2$ which is constant throughout the demixing/mixing process, R is the universal molar gas constant, and wherein the superscripts *'initial gas feed'* and *'initial purge'* indicate that the number of moles relate to the streams before mixing/demixing):

$$\Delta G_{\mathrm{mix,sel}} = nRT \left[ \left( \frac{n_{\mathrm{CH_4}}}{n} \right) ln \left( \frac{n_{\mathrm{CH_4}} + n_{\mathrm{CO_2}}^{\text{initial gas feed}}}{n_{\mathrm{CH_4}} + n_{\mathrm{CO_2}}^{\text{initial gas feed}} - x} \right) \right.$$

$$+ \left( \frac{n_{\mathrm{CO_2}}^{\text{initial gas feed}}}{n} \right) ln \left( \frac{n_{\mathrm{CO_2}}^{\text{initial gas feed}} - x}{n_{\mathrm{CH_4}} + n_{\mathrm{CO_2}}^{\text{initial gas feed}} - x} \cdot \frac{n_{\mathrm{CH_4}} + n_{\mathrm{CO_2}}^{\text{initial gas feed}}}{n_{\mathrm{CO_2}}^{\text{initial gas feed}}} \right)$$

$$+ \left( \frac{x}{n} \right) ln \left( \frac{n_{\mathrm{CO_2}}^{\text{initial purge}} + x}{n_{\mathrm{purge}\neq\mathrm{CO_2}} + n_{\mathrm{CO_2}}^{\text{initial purge}} + x} \cdot \frac{n_{CH_4} + n_{CO_2}^{\text{initial gas feed}} - x}{n_{CO_2}^{\text{initial gas feed}} - x} \right)$$

$$+ \left( \frac{n_{\mathrm{CO_2}}^{\text{initial purge}}}{n} \right) ln \left( \frac{n_{\mathrm{CO_2}}^{\text{initial purge}} + x}{n_{air} + n_{\mathrm{CO_2}}^{\text{initial purge}} + x} \cdot \frac{n_{\mathrm{purge}\neq\mathrm{CO_2}} + n_{\mathrm{CO_2}}^{\text{initial purge}}}{n_{\mathrm{CO_2}}^{\text{initial purge}}} \right)$$

$$\left. + \left( \frac{n_{\mathrm{purge}\neq\mathrm{CO_2}}}{n} \right) ln \left( \frac{n_{\mathrm{purge}\neq\mathrm{CO_2}} + n_{\mathrm{CO_2}}^{\text{initial purge}}}{n_{\mathrm{purge}\neq\mathrm{CO_2}} + n_{\mathrm{CO_2}}^{\text{initial purge}} + x} \right) \right]$$

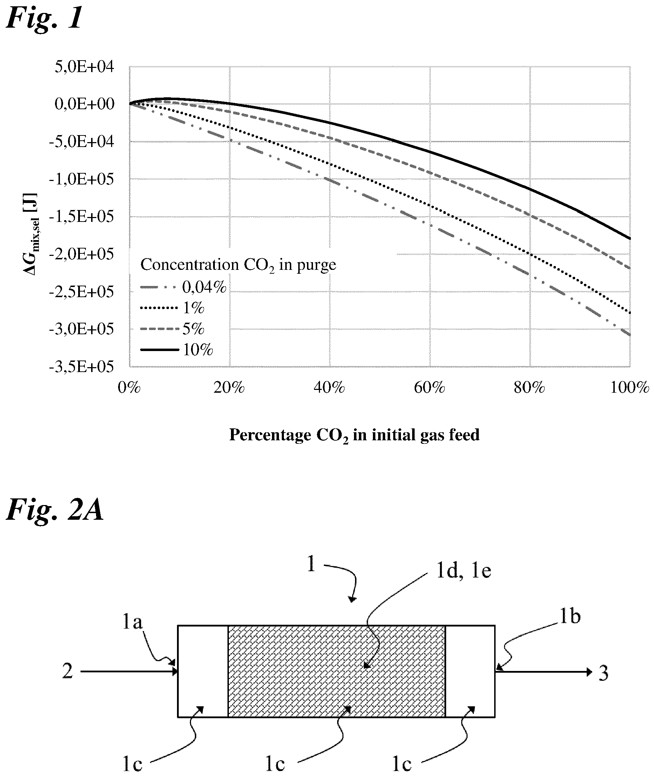

Plotting $\Delta G_{mix,sel}$ for different initial percentages of $CO_2$ in the gas feed ($1\ m^3$, ideal gas, $1\cdot10^5\ Pa$, T =293 K; 41.05 mol) and for a couple of $CO_2$ percentages in the inert gaseous purge ($10\ m^3$, ideal gas, $1\cdot10^5\ Pa$, T =293 K; 410.5 mol), assuming a 90 % removal of the $CO_2$ from the inert gaseous purge at a temperature of 293 K, shows that as long as the concentration of $CO_2$ in the inert gaseous purge is sufficiently lower than the concentration of $CO_2$ in the gas feed, a negative Gibbs free energy of selective demixing/mixing ($\Delta G_{mix,sel}$) results, meaning that this selective demixing/mixing is a spontaneous process that does not require additional energy to go to completion (see Figure 1).

However, in real life, neither the gas feed nor the inert gaseous purge are ideal gases. Moreover, heat losses occur in the system. Hence, without any heating steps, the heat of adsorption remaining in the adsorbent is typically not enough to supply the heat of desorption and to result, together with the above $\Delta G_{mix,sel}$, in an overall negative Gibbs free energy of the adsorption-desorption sequence. On the other hand, the total heat of adsorption generated until full adsorption of the solid adsorbent material with $CO_2$ may raise the temperature of the adsorbent material above its degradation temperature. To avoid degradation of the solid adsorbent material, either a cooling step is required during adsorption or only a fraction of the capacity of the solid adsorbent material can be used.

The inventors have unexpectedly established that the heat released during the exothermic adsorption process of $CO_2$ can be more efficiently used in the endothermic desorption process of $CO_2$ in the very same vessel if a solid adsorbent material selective for adsorbing $CO_2$ is mixed with an inert solid material having a sufficiently high isobaric volumetric heat capacity, to act as a thermal energy buffer, and having a sufficiently high thermal conductivity, to be able to quickly absorb and release heat. Moreover, the temperature increase of the solid adsorbent material during adsorption can be better controlled to avoid thermal degradation, the maximum capacity of the solid adsorbent material can be used more efficiently and the inlet temperature of the inert gaseous purge used during the desorption step can be increased to improve the efficiency of the desorption step.

Accordingly, in a first aspect the invention provides a swing adsorption process for separating $CO_2$ from a gas feed mixture, wherein the process comprises the following order of steps:

(a) providing a tubular vessel (1) being divided into two or more tubular vessel parts (1c) in an axial direction of the tubular vessel (1), wherein the tubular vessel (1) has a feed input end (1a) and a product output end (1b), wherein at least one tubular vessel part (1c) comprises a particulate solid adsorbent material (1d) selective for adsorbing $CO_2$;
(b) providing a gas feed mixture (2) comprising at least 7 mol% $CO_2$;
(c) introducing the gas feed mixture (2) provided in step (b) into the vessel (1) via feed input end (1a) and subjecting the gas feed mixture (2) to an adsorption step by contacting the gas feed mixture (2) with the particulate solid adsorbent material (1d) to provide a gas mixture depleted in $CO_2$ (3), wherein the adsorption step is performed at a first pressure within a first pressure range and at a first temperature within a first temperature range;
(d) releasing the gas mixture depleted in $CO_2$ (3) from vessel (1) via the product output end (1b);
(e) introducing an inert gaseous purge (4) into the vessel (1) via (A) feed input end (1a) or via (B) product output end (1b) and subjecting the particulate solid adsorbent material (1d) to a desorption step to provide an inert gaseous purge enriched in $CO_2$ (5), wherein the desorption step is performed at a second pressure within a second pressure range and at a second temperature within a second temperature range; and
(f) releasing the inert gaseous purge enriched in $CO_2$ (5) from the vessel (1) via (A) the product output end (1b) or via (B) the feed input end (1a);

**characterized in that** a mixture comprising:

• the particulate solid adsorbent material (1d); and
• an inert solid material (1e) having an isobaric volumetric heat capacity at 25 °C of at least 2 J·cm$^{-3}$·K$^{-1}$ and a thermal conductivity at 25 °C of at least 10 W·m$^{-1}$·K$^{-1}$,

substantially fills at least one tubular vessel part (1c).

In a second aspect, the invention provides a tubular vessel (1) being divided into two or more tubular vessel parts (1c) in an axial direction of the tubular vessel (1), wherein the tubular vessel (1) has a feed input end (1a) and a product output end (1b), wherein a mixture comprising:

• a particulate solid adsorbent material (1d) selective for adsorbing $CO_2$; and
• an inert solid material (1e) having an isobaric volumetric heat capacity at 25 °C of at least 2 J·cm$^{-3}$·K$^{-1}$ and a thermal conductivity at 25 °C of at least 10 W·m$^{-11}$·K$^{-1}$,

substantially fills at least one tubular vessel part (1c).

**BRIEF DESCRIPTION OF THE FIGURES**

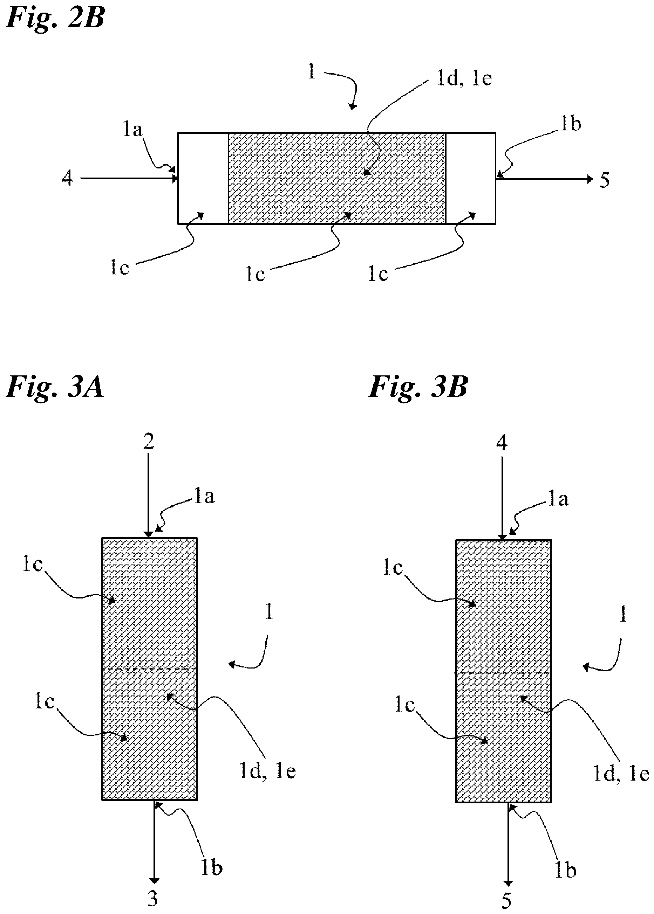

Figure 1 graphically represents the change in Gibbs free energy corresponding to a process of selective demixing of $CO_2$ from an ideal gas feed and subsequently mixing this $CO_2$ with an ideal inert gaseous purge, as a function of the $CO_2$ concentration in the ideal gas feed and as a function of the $CO_2$ concentration in the ideal inert gaseous purge. Figures 2a and 2b depict a tubular vessel (1), positioned horizontally, being divided into three tubular vessel parts (1c) in an axial direction of the tubular vessel (1), wherein the tubular vessel (1) has a feed input end (1a) and a product output end (1b), wherein the tubular vessel part (1c) in the middle is substantially filled with a mixture comprising a particulate solid adsorbent material (1d) selective for adsorbing $CO_2$ and an inert solid material (1e).

Figures 3a and 3b depict a tubular vessel (1), positioned vertically, having two tubular vessel parts (1c) in an axial direction of the tubular vessel (1), said tubular vessel parts (1c) completely occupying the volume of tubular vessel (1), wherein the tubular vessel (1) has a feed input end (1a) and a product output end (1b), wherein both tubular vessel parts (1c) are substantially filled with a mixture comprising a particulate solid adsorbent material (1d) selective for adsorbing $CO_2$ and an inert solid material (1e).

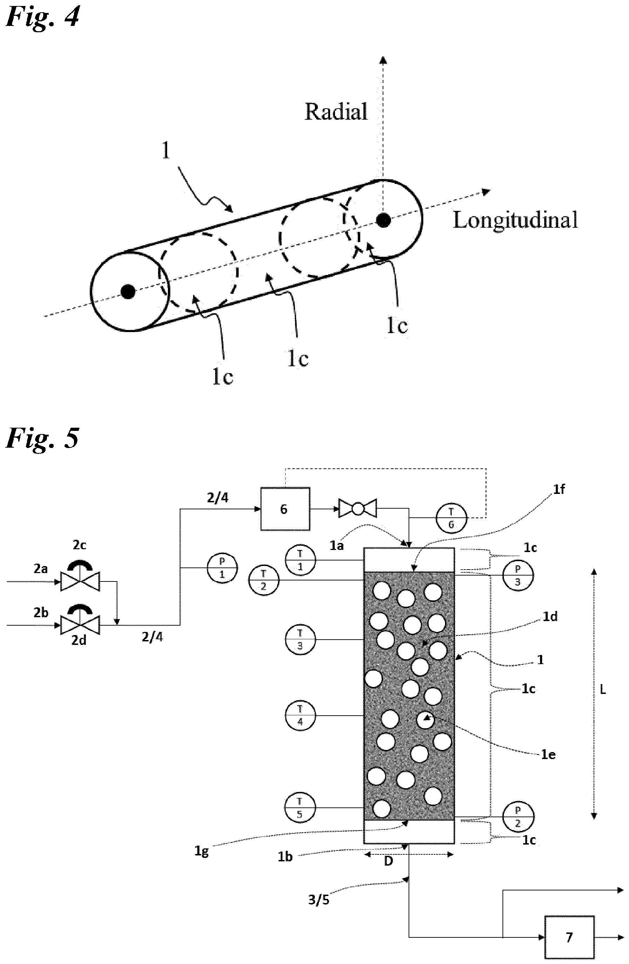

Figure 4 indicates the radial and axial directions of a tubular vessel (1).

Figure 5 graphically represents a flow diagram for performing the process according to the invention.

## DEFINITIONS

The terms *'horizontal'* and *'vertical'* as used herein as regards the spatial arrangement of the tubular vessel (1) have the common meaning in the art. Hence, a horizontal arrangement concerns an arrangement substantially parallel to the floor and a vertical arrangement concerns an arrangement substantially perpendicular to the floor.

The term *'swing adsorption process'* as used herein concerns a process comprising a sequence of (i) an adsorption step in which a (gas) feed mixture is flowed over an adsorbent that preferentially adsorbs a more readily adsorbed component relative to a less readily adsorbed component, followed by a (ii) desorption step due to a certain stimulus.

## DETAILED DESCRIPTION

A first aspect of the invention concerns a swing adsorption process for separating $CO_2$ from a gas feed mixture, wherein the process comprises the following order of steps:

(a) providing a tubular vessel (1) being divided into two or more tubular vessel parts (1c) in an axial direction of the tubular vessel (1), wherein the tubular vessel (1) has a feed input end (1a) and a product output end (1b), wherein at least one tubular vessel part (1c) comprises a particulate solid adsorbent material (1d) selective for adsorbing $CO_2$;
(b) providing a gas feed mixture (2) comprising at least 7 mol% $CO_2$;
(c) introducing the gas feed mixture (2) provided in step (b) into the vessel (1) via feed input end (1a) and subjecting the gas feed mixture (2) to an adsorption step by contacting the gas feed mixture (2) with the particulate solid adsorbent material (1d) to provide a gas mixture depleted in $CO_2$ (3), wherein the adsorption step is performed at a first pressure within a first pressure range and at a first temperature within a first temperature range;
(d) releasing the gas mixture depleted in $CO_2$ (3) from vessel (1) via the product output end (1b);
(e) introducing an inert gaseous purge (4) into the vessel (1) via (A) feed input end (1a) or via (B) product output end (1b) and subjecting the particulate solid adsorbent material (1d) to a desorption step to provide an inert gaseous purge enriched in $CO_2$ (5), wherein the desorption step is performed at a second pressure within a second pressure range and at a second temperature within a second temperature range; and
(f) releasing the inert gaseous purge enriched in $CO_2$ (5) from the vessel (1) via (A) the product output end (1b) or via (B) the feed input end (1a);

**characterized in that** a mixture comprising:

•   the particulate solid adsorbent material (1d); and
•   an inert solid material (1e) having an isobaric volumetric heat capacity at 25 °C of at least 2 $J \cdot cm^{-3} \cdot K^{-1}$ and a thermal conductivity at 25 °C of at least 10 $W \cdot m^{-1} \cdot K^{-1}$,

substantially fills at least one tubular vessel part (1c).

In an embodiment, the process according to the first aspect is a batch-type process. In a preferred embodiment, the process is a semi-batch process, a semi-continuous process or a continuous process.

In the process according to the first aspect, a gas phase should be able to cross the at least one tubular vessel part (1c) that is substantially filled with the mixture comprising the particulate solid adsorbent material (1d) and the inert solid material (1e). As will be appreciated by those skilled in the art, the wording *'substantially fills'* in the context of the present invention does not mean that the at least one tubular vessel part (1c) is completely filled with a gasimpermeable solid phase, but rather that the at least one tubular vessel part (1c) is filled with the mixture of particulate solid adsorbent material (1d) and the inert solid material (1e) with sufficient voids and pores to allow transport of the gas phase across the at least one tubular vessel part (1c). Since there must always be pores and voids present, *'substantially fills'* is not identical to *'completely fills'.*

In an embodiment, the vessel (1) in steps (c) to (f) is positioned horizontally. In a preferred embodiment, the vessel (1) in steps (c) to (f) is positioned vertically and the flow of the gas feed mixture (2) and of the inert gaseous purge (4) is downwards. The inventors have established that this benefits the plug-flow character of the gas flow across the at least one tubular vessel part (1c) substantially filled with the mixture comprising the particulate solid adsorbent material (1d) and the inert solid material (1e)

### *Step (a)*

In step (a) of the process according to the first aspect, a tubular vessel (1) being divided into two or more tubular vessel parts (1c) in an axial direction of the tubular vessel (1) is provided. Since the tubular vessel (1) is *'divided into'* two or more tubular vessel parts (1c), the two or more tubular vessel parts (1c) completely occupy the volume of the tubular vessel (1).

As will be appreciated by those skilled in the art, the wording *'divided into two or more tubular vessel parts (1c) in an axial direction of the tubular vessel (1)'* means that:

(i) the two or more tubular vessel parts (1c) have a length in an axial direction of the tubular vessel (1) that is a fraction of the total length of the tubular vessel (1); and
(ii) the two or more tubular vessel parts (1c) have the same cross-section as the tubular vessel (1) in a radial direction.

What is meant with a radial and axial direction of the tubular vessel (1) and of the tubular vessel parts (1c) is indicated in Figure 4.

The form of the cross section of the tubular vessel (1) and of the tubular vessel parts (1c) in a radial direction is not particularly limited. However, in a preferred embodiment, the tubular vessel (1) and the tubular vessel parts (1c) have a circular, oval, triangular, square or rectangular cross section or a combination thereof in a radial direction. In a very preferred embodiment, the tubular vessel (1) and the tubular vessel parts (1c) have a circular cross section in a radial direction.

The tubular vessel (1) as defined herein allows, in a semi-continuous or continuous mode, for a plug-flow type of transport of a gas phase across the at least one tubular vessel part (1c) substantially filled with the mixture comprising the particulate solid adsorbent material (1d) and the inert solid material (1e).

The diameter or largest dimension of the tubular vessel (1) and of the tubular vessel parts (1c) in a radial direction is not particularly limited. However, for practical purposes, the diameter or largest dimension in a radial direction preferably is between 5 cm and 2 m, such as between 20 cm and 1.5 m or between 30 cm and 1 m. In an embodiment, the diameter or largest dimension of the tubular vessel (1) and of the tubular vessel parts (1c) increases in the axial direction in a direction from the feed input end (1a) to the product output end (1b). Such a geometry increases, in a semi-continuous or continuous mode, the residence time of the gas in the tubular vessel (1) and in the tubular vessel parts (1c) where the driving force for adsorption and desorption is lower.

The length of the tubular vessel (1) in an axial direction is limited by the maximum pressure drop over the tubular vessel (1). Preferably, the length of the tubular vessel (1) in an axial direction is between 40 cm and 4 m, such as between 80 cm and 3 m or between 1 m and 1.5 m.

In an embodiment, the two or more tubular vessel parts (1c), *i.e.* the complete tubular vessel (1), are substantially filled with the mixture comprising the particulate solid adsorbent material (1d) and the inert solid material (1e). See in this respect for example Figures 3A and 3B.

The inventors have established that typical particulate solid adsorbent materials (1d) selective for adsorbing $CO_2$ may swell upon contact with water. The gas feed mixture (2) provided in step (b) may comprise some water. If all tubular vessel parts (1c), *i.e.* the complete tubular vessel (1), are substantially filled with the mixture comprising the particulate solid adsorbent material (1d) and the inert solid material (1e), swelling of the particulate solid adsorbent material (1d) may damage the vessel. Hence, in a preferred embodiment, at least one tubular vessel part (1c) is empty, to enable swelling of the particulate solid adsorbent material (1d) in the tubular vessel (1). In an equally preferred embodiment, at least one tubular vessel part (1c) does not comprise the particulate solid adsorbent material (1d).

If at least one tubular vessel part (1c) is left empty, this may adversely affect the plug-flow character of a gas-phase that is directed through the tubular vessel (1) in a semi-continuous or continuous process. In another preferred embodiment, at least one tubular vessel part (1c) does not comprise the solid adsorbent material (1d) but does comprise a random column packing. In yet another preferred embodiment, at least one tubular vessel part (1c) only contains a random column packing (and no other solid or liquid materials). The term *'random column packing'* as for example used in the art of distillation concerns a randomly fitting filtration material used to optimize surface area over which reactants can interact in a distillation column while minimizing the complexity of construction. In the context of the present invention, the random column packing is utilized not for its high specific surface area, but for its capacity to prevent cyclonic mixing in the upper headspace of the tubular vessel (1). Non-limiting examples of random column packings that can be applied in the context of the present invention are Raschig rings, Pall rings, Bialecki rings, Dixon rings, Lessing rings and combinations thereof. The random column packing can for example be made of ceramics, metal, plastic or glass, preferably of an inert and thermostable plastic, more preferably of polyvinylidene fluoride (PVDF). The inventors have established that filling a tubular vessel part (1c) not comprising the particulate solid adsorbent material (1d) with a random column packing still allows for swelling of the particulate solid adsorbent material (1d) whereas the flow of a gas-phase through the whole vessel is more plug-flow-like than without a random column packing.

In a preferred embodiment, the at least one tubular vessel part (1c) that is substantially filled with the mixture comprising the particulate solid adsorbent material (1d) and the inert solid material (1e) constitutes between 75 and 100 % of the total volume of the tubular vessel (1), more preferably between 80 and 100 %, such as between 85 and 100 %, between 90 and 100 % or between 95 and 100 %. In another preferred embodiment, the at least one tubular vessel part (1c) that is substantially filled with the mixture comprising the solid adsorbent material (1d) and the inert solid material (1e) constitutes between 75 and 99 % of the total volume of the tubular vessel (1), more preferably between 78 and 98 %, such as between 80 and 97 %, between 83 and 96 % or between 85 and 95 %.

At least one tubular vessel part (1c) comprises a particulate solid adsorbent material (1d) selective for adsorbing $CO_2$. Particulate solid adsorbent materials selective for adsorbing $CO_2$ are well known in the art. Preferred examples are chosen from the group consisting of zeolites, all-silica microporous solids, aluminium phosphates, covalent organic frameworks (COFs), activated carbons, metal-organic frameworks (MOFs), amine-functionalised porous structures and combinations thereof. In this respect, reference is made to the review article by S. Choi et al., ChemSusChem, 2009, 2, pp 796-854 and to N. Hedin et al., Nanoscale, 2010, 2, pp 1819-1841, both incorporated herein by reference in their entirety.

Examples of zeolites are (i) zeolites having a Si/Al ratio above about 100 and a framework structure selected from the group consisting of AFT, AFX, DAC, EMT, EUO, IMF, ITH, ITT, KFI, LAU, MFS, MRE, MTT, MWW, NES, PAU, RRO, SFF, STF, STI, SZR, TER, TON, TSC, TUN, VFI and a combination thereof; or (ii) zeolites with a framework structure selected from the group consisting of CAS, EMT, FAU, HEU, IRR, IRY, ITT, LTA, RWY, TSC and VFI and a combination thereof, having (a) a Si/Al ratio of about 5 to about 85 and (b) a potassium cation concentration of about 5% to about 100%, as disclosed in WO2017/087385A1. Further examples are zeolites 13X, 5A and 4A.

In a very preferred embodiment, the particulate solid adsorbent material (1d) is an amine-functionalised porous structure, such as amine-functionalised (mesoporous) silica or a silica-supported amine material, MOF functionalised with amines or aminoresins or an amine-functionalised macroporous or mesoporous polymer structure.

Examples of amine-functionalised silica and silica-supported amine materials are disclosed in P. Bollini et al., J. Mater. Chem., 2011, 21, pp 15100-15120, which is incorporated herein by reference in its entirety.

Examples of amine-functionalised macroporous or mesoporous polymer structures are sold under the trade names Lewatit® VP OC 1065 by Lanxess, Purolite® A109 by Purolite and Purolite® A830 by Purolite.

In a very preferred embodiment, the particulate solid adsorbent material (1d) selective for adsorbing $CO_2$ is an amine-functionalised macroporous or mesoporous polymer structure, such as a macroporous polystyrene with covalently bound amine groups thereon.

As will be appreciated by those skilled in the art, smaller particles result in a higher pressure drop over the at least one tubular vessel part (1c) that is substantially filled with the mixture comprising the solid adsorbent material (1d) and the inert solid material (1e) whereas smaller particles also provide a higher specific surface area for adsorption. Hence, the appropriate size of the particulate solid adsorbent material (1d) depends on a trade-off between pressure drop and adsorption capacity. Preferably, the particulate solid adsorbent material (1d) selective for adsorbing $CO_2$ takes the form of a powder or beads, more preferably a powder or beads with a median particle diameter D50 between 0.1 mm and 5 mm, even more preferably a powder or beads with a median particle diameter D50 between 0.2 and 4 mm, such as between 0.25 and 3 mm or between 0.3 and 2 mm.

The inventors have found that the enthalpy released during the exothermic adsorption process of $CO_2$ in step (c), more particularly the total heat content of the contents of vessel (1) after adsorption step (c), can be more efficiently used in the endothermic desorption process of $CO_2$ in the very same vessel in step (e) if the particulate solid adsorbent material (1d) is mixed with an inert solid material (1e) having a sufficiently high isobaric volumetric heat capacity, to act as a thermal energy buffer, and having a sufficiently high thermal conductivity, to be able to quickly absorb and release heat. Moreover, the temperature increase of the particulate solid adsorbent material (1d) during adsorption can be better controlled to avoid thermal degradation, the maximum capacity of the particulate solid adsorbent material (1d) can be used more efficiently and the inlet temperature of the inert gaseous purge used during the desorption step can be increased to improve the efficiency of the desorption step.

A sufficiently high isobaric 'volumetric' heat capacity is required to absorb and store as much heat per unit of volume occupied by the inert solid material (1e). As will be appreciated by those skilled in the art, the volume occupied by the inert solid material (1e) cannot be simultaneously occupied by particulate solid adsorbent material (1d) to adsorb $CO_2$.

The term 'inert' as used in the context of 'inert solid material (1e)' means that the solid material (1e) does not react, or only to a very limited extent and/or at a very slow rate, with components in the gas feed mixture (2) provided in step (b), with components in the inert gaseous purge (4) provided in step (e) and with the particulate solid adsorbent material (1d) at the adsorption and desorption conditions.

As will be appreciated by those skilled in the art, the inert solid material (1e) and the particulate solid adsorbent material (1d) are different materials.

As explained hereinbefore, the inert solid material (1e) has an isobaric volumetric heat capacity at 25 °C of at least $2 \text{ J·cm}^{-3}\text{·K}^{-1}$ and a thermal conductivity at 25 °C of at least $10 \text{ W·m}^{-1}\text{·K}^{-1}$.

In a preferred embodiment, the inert solid material (1e) has an isobaric volumetric heat capacity at 25 °C of at least $3 \text{ J·cm}^{-3}\text{·K}^{-1}$, more preferably at least $3.5 \text{ J·cm}^{-3}\text{·K}^{-1}$, and a thermal conductivity at 25 °C of at least $30 \text{ W·m}^{-1}\text{·K}^{-1}$ more preferably at least $50 \text{ W·m}^{-1}\text{·K}^{-1}$.

Suitable examples of inert solid materials (1e) are chosen from the group consisting of steel, stainless steel, aluminium, copper and combinations thereof. Preferably, the inert solid material (1e) is steel or stainless steel.

In a preferred embodiment, the volume ratio of the particulate solid adsorbent material (1d) to the inert solid material (1e) in the at least one tubular vessel part (1c) is between 100:1 and 1:2, more preferably between 50:1 and 1:1, even more preferably between 10:1 and 3:1, such as about 2:1.

In a very preferred embodiment, the mixture comprising the particulate solid adsorbent material (1d) and the inert solid material (1e) as defined hereinbefore consists of the particulate solid adsorbent material (1d) and the inert solid material (1e).

In another embodiment, the mixture comprising the particulate solid adsorbent material (1d) and the inert solid material (1e) as defined hereinbefore consists of, based on the weight of the mixture:

(i) particulate solid adsorbent material (1d);
(ii) inert solid material (1e); and
(iii) 0.1 - 5 wt.% of further ingredients.

In a preferred embodiment, the weight ratio of the particulate solid adsorbent material (1d) to the inert solid material (1e) in the at least one tubular vessel part (1c) changes in the axial direction of the at least one tubular vessel part (1c). In a very preferred embodiment, the weight ratio of the particulate solid adsorbent material (1d) to the inert solid material (1e) in the at least one tubular vessel part (1c) shows a gradient in the axial direction of the at least one tubular vessel part (1c), wherein this weight ratio is lower in the axial direction to the feed input end (1a) than it is in the axial direction to the product output end (1b). In this particular embodiment, the weight percentage of inert solid material (1e) is (relatively) high when in contact with *'fresh gas feed mixture (2)'* still having a high concentration of $CO_2$ in adsorption step (c). The heat of adsorption can then be effectively distributed without too much increase of the temperature of the particulate solid adsorbent material (1d). Moreover, in this particular embodiment, the weight percentage of inert solid material (1e) is (relatively) high when in contact with *'inert gaseous purge (4)'* already having an increased concentration of $CO_2$ in desorption step (c). The heat of adsorption *'stored'* in the inert solid material (1e) can then be effectively used in the desorption step.

In another embodiment, at least 80 wt.% of the mixture comprising the particulate solid adsorbent material (1d) and the inert solid material (1e) as defined hereinbefore consists of the particulate solid adsorbent material (1d) and the inert solid material (1e), based on the weight of the mixture, preferably at least 85 wt.%, more preferably at least 90 wt.%, such as at least 95 wt% or at least 99 wt.%.

In an embodiment, the inert solid material (1e) is a particulate material, such as a powder or beads. Preferably, the inert solid material (1e) takes the form of beads, more preferably beads with a diameter between 0.5 and 10 mm, even more preferably beads with a diameter between 1 and 8 mm, such as 2 or 4 mm.

In another embodiment, the inert solid material (1e) is a sheet-like material, preferably a metal sheet-like material such as sheet-like steel wool. In this embodiment, the mixture preferably comprises alternating layers of particulate solid adsorbent material (1d) and sheet-like inert solid material (1e), wherein the surfaces of the sheet-like material are arranged in a direction parallel to the axial direction of the tubular vessel (1) and of the tubular vessel parts (1c).

In yet another embodiment, the inert solid material (1e) is a combination of a particulate material, preferably beads with a diameter between 0.5 and 10 mm, and a sheet-like material.

*Step (b)*

In step (b) of the process according to first aspect, a gas feed mixture (2) comprising at least 7 mol% $CO_2$ is provided. In an embodiment, the gas feed mixture (2) provided in step (b) is chosen from the group consisting of syngas, flue gas and biogas. In a preferred embodiment, the gas feed mixture provided in step (b) is biogas. In a more preferred embodiment, the gas feed mixture (2) is biogas produced in a thermophilic (bio)digester. A thermophilic (bio)digester is a kind of biodigester that operates at temperatures of 50 °C or above, thus producing biogas with a temperature of 50 °C or above. Since biogas needs to be transported and preferably subjected to $H_2S$ removal, the temperature of the biogas to be subjected to the swing adsorption process is typically lower than 50 °C, such as about 45 °C.

In an embodiment, the gas feed mixture (2) comprises at least 8 mol% $CO_2$, at least 9 mol%, at least 10 mol%, at least 11 mol%, at least 12 mol%, at least 13 mol%, at least 14 mol%, at least 15 mol%, at least 16 mol%, at least 17 mol%, at least 18 mol% or at least 19 mol%.

In a preferred embodiment the gas feed mixture (2) is biogas comprising 20 - 55 mol% of $CO_2$, more preferably biogas comprising 25 - 50 mol% of $CO_2$, even more preferably biogas comprising 30 - 45 mol% of $CO_2$.

In a preferred embodiment, the gas feed mixture provided in step (b) is biogas comprising:

(i) 20 - 55 mol% of $CO_2$;
(ii) 40 - 80 mol% of $CH_4$; and
(iii) 0 - 10 mol% or further gaseous compounds, such as water vapour, nitrogen, oxygen,

$H_2S$, ammonia, $H_2$, hydrocarbons other than $CH_4$ and combinations thereof, wherein (i), (ii) and (iii) add up to 100 mol%.

In another preferred embodiment, the gas feed mixture provided in step (b) is biogas comprising:

(i) 25 - 50 mol% of $CO_2$;
(ii) 45 - 75 mol% of $CH_4$; and
(iii) 0 - 8 mol% or further gaseous compounds, such as water vapour, nitrogen, oxygen,

$H_2S$, ammonia, $H_2$, hydrocarbons other than $CH_4$ and combinations thereof, wherein (i), (ii) and (iii) add up to 100 mol%.

In a very preferred embodiment, the gas feed mixture provided in step (b) is biogas comprising:

(i) 30 - 45 mol% of $CO_2$;
(ii) 50 - 70 mol% of $CH_4$; and
(iii) 0 - 6 mol% or further gaseous compounds, such as water vapour, nitrogen, oxygen,

$H_2S$, ammonia, $H_2$, hydrocarbons other than $CH_4$ and combinations thereof, wherein (i), (ii) and (iii) add up to 100 mol%.

In a very preferred embodiment, the concentration of $H_2S$ in the gas feed mixture (2) provided in step (b) is less than 0.005 mol% (*i.e.* less than 50 ppm), even more preferably less than 0.0025 mol% (*i.e.* less than 25 ppm), most preferably between 0 and 0.001 mol% (*i.e.* between 0 than 10 ppm). Biogas typically comprises 0.01- 0.4 mol% (*i.e.* 100 - 4000 ppm) of $H_2S$. The presence of $H_2S$ is problematic due to its corrosiveness and toxicity. If the gas feed mixture (2) provided in step (b) is biogas, such as biogas produced in a thermophilic (bio)digester, this biogas typically requires pretreatment to remove $H_2S$. $H_2S$ can for example be removed from biogas using a scrubber or by treatment with (impregnated) activated carbon or granular iron(hydr)oxide

### *Steps (c) and (d)*

In step (c) of the process according to the first aspect, the gas feed mixture (2) provided in step (b) is introduced into the vessel (1) via feed input end (1a) and the gas feed mixture (2) is subjected to an adsorption step by contacting the gas feed mixture (2) with the particulate solid adsorbent material (1d) to provide a gas mixture depleted in $CO_2$ (3), wherein the adsorption step is performed at a first pressure within a first pressure range and at a first temperature within a first temperature range. In step (d) of the process according to the first aspect, the gas mixture depleted in $CO_2$ (3) is released from vessel (1) via the product output end (1b).

In a preferred embodiment, the temperature of the gas feed mixture (2) introduced into the vessel (1) is between 30 and 62 °C, more preferably between 40 and 60 °C, even more preferably between 45 and 58 °C.

Hence, the gas feed mixture (2) provided in step (b) may require preheating. Preheating may, however, be dispensed with if biogas produced in a thermophilic (bio)digester is applied as the gas feed mixture (2). Preheating may be performed using an heat exchange element with for example the gas mixture depleted in $CO_2$ (3) provided in step (d) as heating medium or by using heat provided by combustion of biogas.

In an embodiment, steps (c) and (d) are performed as a batch process.

In a preferred embodiment, combined steps (c) and (d) are performed in a semi-continuous mode, meaning that the gas feed mixture (2) is continuously provided to the vessel (1) via feed input end (1a) and a gas mixture depleted in $CO_2$ (3) is continuously released from vessel (1) via the product output end (1b) until the end of the adsorption phase.

The adsorption process of $CO_2$ in step (c) is exothermic, meaning that heat is released on adsorption. In a semi-continuous process, continuous release of heat results in a continuous increase of the temperature of the particulate solid adsorbent material (1d). The temperature of the particulate solid adsorbent material (1d) preferably does not exceed about 50 °C, since such high temperatures result in degradation of the particulate solid adsorbent material (1d). Hence, in an embodiment, combined steps (c) and (d) are stopped if the temperature of the particulate solid adsorbent material (1d) reaches a certain maximum temperature, such as about 50 °C. As will be appreciated by those skilled in the art, the degradation temperature depends on the particulate solid adsorbent material (1d) and on whether oxygen is present.

As will be appreciated by those skilled in the art, the gas mixture depleted in $CO_2$ (3) has a lower $CO_2$-concentration than the gas feed mixture (2). In an embodiment, the $CO_2$-concentraton in the gas mixture depleted in $CO_2$ (3) is 20 % lower than in the gas feed mixture (2), more preferably 30 % lower, even more preferably 40 % lower, such as 50 % lower, 60 % lower, 70 % lower, 80 % lower or 90 % lower. In another embodiment, the $CO_2$-concentraton in the gas mixture depleted in $CO_2$ (3) is between 20 and 99.5 % lower than in the gas feed mixture (2), more preferably between 30 and 99 % lower, even more preferably between 40 and 98 % lower, such as between 50 and 97 % lower, between 60 and 96% lower, or between 70 and 95 % lower.

In yet another embodiment, combined steps (c) and (d) are continuously performed until the COz-concentraton in the gas mixture depleted in $CO_2$ (3) is 20 % lower than in the gas feed mixture (2), more preferably 30 % lower, even more preferably 40 % lower, such as 50 % lower, 60 % lower, 70 % lower, 80 % lower or 90 % lower.

In still another embodiment, combined steps (c) and (d) are continuously performed until the $CO_2$-concentraton in the gas mixture depleted in $CO_2$ (3) is between 20 and 99.5 % lower than in the gas feed mixture (2), more preferably between 30 and 99 % lower, even more preferably between 40 and 98 % lower, such as between 50 and 97 % lower, between 60 and 96% lower, or between 70 and 95 % lower.

In a very preferred embodiment, the gas feed mixture (2) is biogas comprising 20 - 55 mol% of $CO_2$, preferably biogas comprising 25 - 50 mol% of $CO_2$, more preferably biogas comprising 30 - 45 mol% of $CO_2$, and the gas mixture depleted in $CO_2$ (3) has a $CO_2$ concentration of up to 10 mol% $CO_2$, preferably a $CO_2$ concentration of up to 9 mol% $CO_2$, more preferably a $CO_2$ concentration of up to 8 mol% $CO_2$.

In a very preferred embodiment, the gas feed mixture (2) is biogas comprising 20 - 55 mol% of $CO_2$, preferably biogas comprising 25 - 50 mol% of $CO_2$, more preferably biogas comprising 30 - 45 mol% of $CO_2$, and combined steps (c) and (d) are continuously performed until the gas mixture depleted in $CO_2$ (3) has a $CO_2$ concentration of up to 10 mol% $CO_2$, preferably a $CO_2$ concentration of up to 9 mol% $CO_2$, more preferably a $CO_2$ concentration of up to 8 mol% $CO_2$.

The *'first temperature'* at which the adsorption step (c) is performed concerns the temperature of the solid particulate adsorbent material (1d).

As will be appreciated by those skilled in the art, the first temperature during adsorption step (c) varies as a function of time, varies along the axial direction of the at least one tubular vessel part (1c) when combined steps (c) and (d) are continuously performed and depends on the temperature of the gas feed mixture (2) provided in step (b). In an embodiment, the first temperature during adsorption step (c) ranges between 30 and about 50 °C, preferably between 40 and 50 °C, more preferably between 44 and 50 °C. As explained hereinbefore, the temperature of the gas feed mixture (2) introduced into the vessel (1) can be different.

Moreover, as will be appreciated by those skilled in the art, the first pressure during adsorption step (c) varies as a function of time, varies along the axial direction of the at least one tubular vessel part (1c) when combined steps (c) and (d) are continuously performed and depends on the pressure of the gas feed mixture (2) provided in step (b). In an embodiment, the first pressure during adsorption step (c) ranges between 950 and 1200 mbar, preferably between 1000 and 1100 mbar, more preferably between 1000 and 1050 mbar. The pressure drop over the vessel (1) when combined steps (c) and (d) are continuously performed is typically between 10 and 50 mbar, such as 20 or 30 mbar.

### *Step (e) and (f)*

As indicated hereinbefore, steps (e) and (f) can be performed in different ways. In scenario (A) of step (e) of the process according to the first aspect, an inert gaseous purge (4) is introduced into the vessel (1) via feed input end (1a) and the particulate solid adsorbent material (1d) loaded with $CO_2$ is subjected to a desorption step to provide an inert gaseous purge enriched in $CO_2$ (5). In scenario (A) of step (f) of the process according to the first aspect, the inert gaseous purge enriched in $CO_2$ (5) is released from the vessel (1) via the product output end (1b).

In scenario (B) of step (e) of the process according to the first aspect, an inert gaseous purge (4) is introduced into the vessel (1) via product output end (1b) and the particulate solid adsorbent material (1d) loaded with $CO_2$ is subjected to a desorption step to provide an inert gaseous purge enriched in $CO_2$ (5). In scenario (B) of step (f) of the process according to the first aspect, the inert gaseous purge enriched in $CO_2$ (5) is released from the vessel (1) via the feed input end (1a). Scenario (B) is preferred.

The term *'inert'* as used in the context of '*inert gaseous purge (4)*' means that the gaseous purge (4) does not or hardly contain compounds that deactivate the solid adsorbent material (1d) and that does not or hardly contain compounds that react with the inert solid material (1e) at the desorption conditions.

The inert gaseous purge (4) necessarily is a gaseous stream with a low $CO_2$ content. In a preferred embodiment, the inert gaseous purge (4) has a $CO_2$ concentration of less than 2 mol%, more preferably less than 1 mol%, even more preferably less than 0.5 mol%. This means that the partial pressure of $CO_2$ in the inert gaseous purge that is introduced into the vessel (1) in step (e) is much lower than the partial saturation pressure of $CO_2$.

In a very preferred embodiment, the inert gaseous purge (4) that is introduced into the vessel (1) in step (e) is air. Air has a very low concentration of $CO_2$, typically about 0.04 mol%.

In an embodiment, steps (e) and (f) are performed as a batch process.

In a preferred embodiment, combined steps (e) and (f) are performed in a semi-continuous mode, meaning that the inert gaseous purge (4) is continuously provided to the vessel (1) and an inert gaseous purge enriched in $CO_2$ (5) is continuously released from the vessel (1) until the end of the desorption phase.

Typically, in a semi-continuous mode, steps (e) and (f) are continued until the $CO_2$ concentration in the inert gaseous purge enriched in $CO_2$ (5) has dropped below a certain threshold value.

In a preferred embodiment, the temperature of the inert gaseous purge (4) introduced into the vessel (1) is between 0 and 80 °C, more preferably between 10 and 75 °C. The higher the temperature of the inert gaseous purge (4) introduced into the vessel (1), the more efficient the desorption process. However, as explained hereinbefore, the temperature of the particulate solid adsorbent material (1d) should preferably not exceed about 50 °C, since such high temperatures may result in degradation of the particulate solid adsorbent material (1d).

The inert gaseous purge (4) provided in step (b) may require preheating. Preheating may be performed using an heat exchange element with for example the gas mixture depleted in $CO_2$ (3) provided in step (d) as heating medium or by using heat provided by combustion of biogas.

The *'second temperature'* at which the desorption step (e) is performed concerns the temperature of the solid particulate adsorbent material (1d).

As will be appreciated by those skilled in the art, the second temperature during desorption step (e) varies as a function of time, varies along the axial direction of the at least one tubular vessel part (1c) when combined steps (e) and (f) are continuously performed and depends on the temperature of inert gaseous purge (4).

In an embodiment, the second temperature during adsorption step (c) ranges between 30 and about 50 °C, preferably between 40 and 50 °C, more preferably between 44 and 50 °C. As explained hereinbefore, the temperature of the inert gaseous purge (4) introduced into the vessel (1) can be different.

Moreover, as will be appreciated by those skilled in the art, the second pressure during desorption step (e) varies as a function of time, varies along the axial direction of the at least one tubular vessel part (1c) when combined steps (e) and (f) are continuously performed and depends on the pressure of the inert gaseous purge (4). In an embodiment, the second pressure during adsorption step (c) ranges between 950 and 1350 mbar, preferably between 1000 and 1300 mbar, more preferably between 1000 and 1250 mbar. The pressure drop over the vessel (1) when combined steps (e) and (f) are continuously performed is typically between 50 and 300 mbar, preferably between 100 and 275 mbar, such as about 220 mbar.

*Further process embodiments*

As will be appreciated by those skilled in the art, the adsorption and desorption process as defined hereinbefore can be repeated, *i.e.* after step (f), the process can be continued with step (b).

The swing adsorption process as defined hereinbefore is simultaneously and preferably continuously performed in two or more tubular vessels (1) that are operated in parallel, meaning that while one or more tubular vessels (1) are in adsorption mode, one or more further tubular vessels are in desorption mode and after some time, the roles of the tubular vessels (1) are switched. An example is a process that is performed in two tubular vessels (1) wherein the first tubular vessel (1A) is in adsorption mode and wherein the second tubular vessel (1B) is in desorption mode at the same time, and wherein after some time, the roles of the tubular vessels (1A) and (1B) are switched.

In such an embodiment, both tubular vessels (1A) and (1B) are connected to a supply of the gas feed mixture (2) comprising at least 7 mol% $CO_2$ (e.g. biogas) and to a supply of an inert gaseous purge (4) (e.g. ambient air). Controlled by a series of switches (e.g. pneumatic valves) in the supply lines to the tubular vessels (1A) and (1B), each vessel (1A) or (1B) will have either gas feed mixture (2) flowing through it or inert gaseous purge (4) at any given moment.

While the gas feed mixture (2) comprising at least 7 mol% $CO_2$ flows through tubular vessel (1A), it functions as an adsorption column where the $CO_2$ is adsorbed by the particulate solid sorbent material (1d) and a flow of gas mixture depleted in $CO_2$ (3) leaves tubular vessel (1A). At some point in time, the flow of the gas feed mixture (2) comprising at least 7 mol% $CO_2$ is switched over to tubular vessel (1B). Subsequently, tubular vessel (1A) is flushed with the inert gaseous purge (4). In this step, the particulate solid sorbent material (1d) is regenerated and can be reused in the next adsorption phase. When tubular vessel (1A) is regenerated, and tubular vessel (1B) is saturated with $CO_2$, the flows are switched again to the original situation. In this way, a continuous process is created using (at least) two tubular vessels (1) where (at least) one tubular vessel (1) is always regenerating, and the other one(s) are adsorbing $CO_2$. The methodology described above for a two-vessel system, can easily be adapted for a multivessel operation, utilizing more advanced switching schemes.

Preferably, the number of tubular vessels (1) operating in adsorption mode is lower than the number of tubular vessels (1) operating in desorption mode at any given moment. An example is a process that is performed in three tubular vessels (1) wherein in a first phase the first tubular vessel (1A) is in adsorption mode and wherein the second tubular vessel (1B) and the third tubular vessel (1C) are in desorption mode at the same time, and wherein after some time, the roles of the tubular vessels are switched with the proviso that there are always two tubular vessels in desorption mode and one in adsorption mode. For example, in a second phase, the first tubular vessel (1A) is in desorption mode, the second tubular vessel (1B) is in adsorption mode and the third tubular vessel (1C) is in desorption mode at the same time. In a third phase, the first tubular vessel (1A) is in desorption mode, the second tubular vessel (1B) is in desorption mode and the third tubular vessel (1C) is in adsorption mode at the same time. After the third phase, the first phase starts again, meaning that, averaged over the three phases, the desorption time in every tubular vessel is twice the adsorption time.

Energy efficiency of the process according to the first aspect can be improved by using the gas mixture depleted in $CO_2$ (3) provided in step (d) and/or the inert gaseous purge enriched in $CO_2$ (5) provided in step (f) to preheat the gas feed mixture (2) provided in step (b) and/or the inert gaseous purge (4) provided in step (e).

In a preferred embodiment, the first pressure in step (c) differs less than 200 mbar from the second pressure in step (e) and the first temperature in step (c) differs less than 5 K from the second temperature in step (e), more preferably less than 3 K.

### *Tubular vessel (1)*

In a second aspect, the invention provides a tubular vessel (1) being divided into two or more tubular vessel parts (1c) in an axial direction of the tubular vessel (1), wherein the tubular vessel (1) has a feed input end (1a) and a product output end (1b), wherein a mixture comprising:

- a particulate solid adsorbent material (1d) selective for adsorbing $CO_2$; and
- an inert solid material (1e) having an isobaric volumetric heat capacity at 25 °C of at least 2 $J \cdot cm^{-3} \cdot K^{-1}$ and a thermal conductivity at 25 °C of at least 10 $W \cdot m^{-1} \cdot K^{-1}$,

substantially fills at least one tubular vessel part (1c).

Any preferred embodiment defined hereinbefore in the context of the first aspect equally applies to the second aspect, wherever possible.

Thus, the invention has been described by reference to certain embodiments discussed above. It will be recognized that these embodiments are susceptible to various modifications and alternative forms well known to those of skill in the art.

Furthermore, for a proper understanding of this document and its claims, it is to be understood that the verb *'to comprise'* and its conjugations are used in its non-limiting sense to mean that items following the word are included, but items not specifically mentioned are not excluded. In addition, reference to an element by the indefinite article *'a'* or *'an'* does not exclude the possibility that more than one of the element is present, unless the context clearly requires that there be one and only one of the elements. The indefinite article *'a'* or *'an'* thus usually means *'at least one'*.

### EXAMPLES

As explained hereinbefore, the temperature of the particulate solid adsorbent material (1d) should not exceed a threshold value during adsorption/desorption, to avoid degradation. As will be appreciated by those skilled in the art, the degradation temperature depends on the particulate solid adsorbent material (1d) and on whether oxygen is present.

The swing adsorption process as defined hereinbefore is simultaneously and preferably continuously performed in two or more tubular vessels (1) that are operated in parallel, meaning that while one or more tubular vessels (1) are in adsorption mode, one or more further tubular vessels are in desorption mode and after some time, the roles of the tubular vessels (1) are switched. An example is a process that is performed in two tubular vessels (1) wherein the first tubular vessel (1A) is in adsorption mode and wherein the second tubular vessel (1B) is in desorption mode at the same time, and wherein after some time, the roles of the tubular vessels (1A) and (1B) are switched.

As will be appreciated by those skilled in the art, such a continuous process requires the adsorption time of the one or more tubular vessels (1) in adsorption mode and the desorption time of the one or more tubular vessels (1) in desorption mode to match. Within the constraint of a matching adsorption time and desorption time, the adsorption conditions and desorption conditions should be chosen to optimize the amount of mmol $CO_2$ that can be removed per kg of the particulate sorbent material (1d), *i.e.* to optimize the cyclic capacity in mmol $CO_2$ removed/kg particulate sorbent material (1d). The inventors have established that there are two limiting factors in the optimization. A more efficient desorption phase requires a higher temperature of the particulate sorbent material (1d) at the start of desorption (and thus at the end of the adsorption phase) and a higher temperature of the inert gaseous purge (4) to provide sufficient heat for the endothermic desorption reaction to be as complete as possible. However, heating the particulate sorbent material (1d) too much, e.g. by using the heat of adsorption during the adsorption phase and/or by increasing the temperature of the inert gaseous purge (4), typically leads to degradation of the particulate sorbent material (1d).

## *Comparative Example 1*

Experiments were performed in the setup graphically indicated in the flow diagram of Figure 5. A thermally insulated tubular cylindrical vessel (1) having an internal diameter (D) of 50 mm, a feed input end (1a), a product output end (1b), and 3 tubular vessel parts (1c), wherein the middle tubular vessel part (1c) has a length (L) of 40 cm was provided. The middle tubular vessel part (1c) was loosely packed with 0.33 kg of a bed consisting of particulate solid adsorbent material (1d), so that the bed was still permeable to gas with limited pressure drop across the bed. The particulate solid adsorbent material (1d) applied was Lewatit® VP OC 1065 particles, obtained from Lanxess, Germany. The particulate solid adsorbent material (1d) was kept in place in the middle tubular vessel part (1c) by a wire mesh bed limiter (1f) and by a sintered plate bed support (1g).

The bed in the middle tubular vessel part (1c) was subjected to multiple cycles of adsorption and desorption steps, wherein each individual cycle consisted of an adsorption step followed by a desorption step.

In a first step (adsorption phase), a gas feed mixture (2) consisting of 89.3 mol% $N_2$ and 10.7 mol% $CO_2$ was provided. This gas feed mixture (2) was prepared by mixing pure $N_2$ (2a) and pure $CO_2$ (2b) using mass flow controllers (2c) and (2d). Gas feed mixture (2) was preheated to different temperatures (see Table 1 below) using electrical heater (6) and fed to feed input end (1a) of tubular vessel (1).

The gas feed mixture (2) was forced through the reactor at a speed of 0.037 m/s. The temperature in the vessel (1) was monitored using thermocouples T1 to T5 at 5 positions in the direction of the gas flow. Thermocouple T1 was positioned above the wire mesh bed limiter (1e) and was used to monitor the temperature of the gas feed mixture (2) flowing into the bed. Thermocouples T2 to T5 were placed inside the bed to monitor the temperature of the bed. The maximum temperature reached in the bed is obtained during the adsorption phase measured at the beginning of the bed in the direction of the gas flow, *i.e.* at the position of thermocouple T2. The temperature measured downstream of thermocouple T2 was always lower.

The pressure drop across the bed in the middle tubular vessel part (1c) was monitored by pressure gauges P2 and P3, positioned close to the sintered plate bed support (1g) and close to the wire mesh bed limiter (1f), respectively.

During the adsorption phase, the Lewatit® VP OC 1065 particles adsorbed $CO_2$ from the gas feed mixture (2) flowing through the bed. This adsorption reaction is exothermic, meaning that the temperature of the bed and of the gas flowing through the bed increased during adsorption. The rise in temperature was highest close to the feed input end (1a) of the middle tubular vessel part (1c) *i.e.* at the position of thermocouple T2.

A gas mixture depleted in $CO_2$ (3) was discharged via product output end (1b) of tubular vessel (1). Typically, if after some time the temperature somewhere in the bed exceeds a threshold value, the adsorption phase is stopped to avoid degradation of the Lewatit® VP OC 1065 particles. The maximum temperature allowable to avoid degradation of the Lewatit® VP OC 1065 particles in the presence of oxygen is about 50 °C. If no oxygen is present, this temperature is about 80 °C. In this specific example, no oxygen was present. However, since in relevant embodiments the inert gaseous purge (4) is air, the maximum temperature of the adsorbent at thermocouple T2 during the adsorption phase was taken to be about 50 °C.

During the adsorption phase, the composition of the gas mixture depleted in $CO_2$ (3) was continuously monitored in a gas sampler (7) to check whether breakthrough of $CO_2$ took place. If the gas mixture depleted in $CO_2$ (3) exceeded a certain concentration of $CO_2$, the Lewatit® VP OC 1065 particles reached their maximum adsorption capacity and the adsorption phase was stopped. The corresponding time, in (s), required to obtain breakthrough of $CO_2$ was noted. Hence, the adsorption phase was either stopped to avoid degradation of the Lewatit® VP OC 1065 particles or to avoid breakthrough of $CO_2$.

In a second step (desorption phase), only an inert gaseous purge (4) consisting of pure $N_2$ (2a) was forced through the bed using mass flow controller (2c) at a speed of 0.037 m/s. In the present experiment, inert gaseous purge (4) was preheated to different temperatures (see Table 1 below) using an electrical heater (6). The desorption reaction is endothermic, meaning that the temperature of the bed and of the gas flowing through the bed decreased during desorption. An inert gaseous purge enriched in $CO_2$ (5) was discharged via product output end (1b) of tubular vessel (1). During the desorption phase, the composition of the inert gaseous purge enriched in $CO_2$ (5) was continuously monitored in a gas sampler (7). When the inert gaseous purge enriched in $CO_2$ (5) reached a lower limit of the concentration of $CO_2$, the Lewatit® VP OC 1065 particles reached their maximum desorption and the desorption phase was stopped.

Results averaged over multiple cycli of subsequent adsorption and desorption phases in the same vessel (1) for three different temperatures of the gas feed mixture (2) and the inert gaseous purge (4) applied during the desorption phase are presented in Table 1. The cyclic capacity concerns the amount of $CO_2$ (in mmol) that was removed during one cycle per kg of particulate solid adsorbent material (1d).

Table 1: results without addition of inert solid material (1e)

| Test | Temperature gas feed mixture (2) at T1 during adsorption | Temperature inert gaseous purge (4) at T1 during desorption | Max. temperature adsorbent at T2 during | Breakthrough time | Cyclic capacity |
|---|---|---|---|---|---|
| | [°C] | [°C] | [°C] | [s] | [mmol $CO_2$/kg adsorbent] |
| 1 | 52.0 | 52.0 | 44 | 109 | 116 |
| 2 | 58.5 | 58.5 | 49 | 113 | 121 |
| 3 | 65.5 | 65.5 | 53 | 119 | 127 |

## *Example 2*

Experiments were performed in the setup graphically indicated in the flow diagram of Figure 5.

The middle tubular vessel part (1c) of the thermally insulated tubular cylindrical vessel (1) as defined in Comparative Example 1 was filled with a bed consisting of a mixture of 0.18 kg of a particulate solid adsorbent material (1d) and an inert solid material (1e), in a volume ratio of 7:3. The particulate solid adsorbent material (1d) consisted again of Lewatit® VP OC 1065 particles, obtained from Lanxess, Germany. The inert solid material (1e) consisted of steel beads (type A40) having a median diameter of 0.7 mm, obtained from Jumbo Industrial Equipment. These steel beads have a thermal conductivity at 25 °C of more than 10 $W \cdot m^{-1} \cdot K^{-1}$ and an isobaric volumetric heat capacity at 25 °C of more than 2 $J \cdot cm^{-3} \cdot K^{-1}$. The mixture of particulate adsorbent material (1d) and inert solid material (1e) was kept in place in the middle tubular vessel part (1c) by a wire mesh bed limiter (1f) and by a sintered plate bed support (1g).

The bed in the middle tubular vessel part (1c) was subjected to multiple cycles of adsorption and desorption steps as defined in Comparative Example 1, wherein each individual cycle consists of an adsorption step followed by a desorption step. The inert gaseous purge (4) was preheated to different temperatures (see Table 2 below) using electrical heater (6).

Results averaged over multiple cycli of subsequent adsorption and desorption stages in the same vessel for four different temperatures of the gas feed mixture (2) and inert gaseous purge (4) applied during the desorption phase are presented in Table 2. The cyclic capacity concerns the amount of $CO_2$ (in mmol) that was removed during one cycle per kg of particulate solid adsorbent material (1d).

Table 2: results with addition of inert solid material (1e)

| Test | Temperature gas feed mixture (2) at T1 during adsorption | Temperature inert gaseous purge (4) at T1 during desorption | Max. temperature adsorbent at T2 during adsorption/desorption | Breakthrough time | Cyclic capacity |
|---|---|---|---|---|---|
| | [°C] | [°C] | [°C] | [s] | [mmol $CO_2$/kg adsorbent] |
| 4 | 52.0 | 52.0 | 38 | 58 | 113 |
| 5 | 58.5 | 58.5 | 42 | 62 | 121 |
| 6 | 65.5 | 65.5 | 45 | 66 | 129 |
| 7 | 76.0 | 76.0 | 51 | 74 | 144 |

### Conclusions

It can be inferred from a comparison of Table 1 and Table 2 that the addition of inert solid material (1e) consisting of steel beads helps to considerably reduce the maximum temperature of the particulate solid adsorbent material (1d) reached during the adsorption phase (measured at thermocouple T2). Moreover, due to the lower maximum temperature of the particulate solid adsorbent material (1d) reached during the adsorption phase, the temperature of the inert gaseous purge (4) at T1 during desorption can be increased from about 60 °C up to 76 °C without exceeding the maximum temperature of the particulate solid adsorbent material (1d) at thermocouple T2 of about 50 °C.

Multiple advantages can be inferred from these observations. For a given temperature of the inert gaseous purge (4) at T1, the particulate solid adsorbent material (1d) in the vessel further comprising inert solid material (1e) can be loaded to a higher degree of $CO_2$ per kg than the particulate solid adsorbent material (1d) in the vessel not comprising inert solid material (1e), because the heat released can be partially absorbed by the inert solid material (1e). In other words, the inert solid material (1e), due to its high isobaric volumetric heat capacity, allows the bed to absorb more heat without raising the temperature too much, such as to above the degradation temperature of the particulate solid adsorbent material (1d). Hence, loss in adsorbent capacity due to replacement of particulate solid adsorbent material (1d) with inert solid material (1e) can at least partially be compensated by a higher $CO_2$ load per kg of particulate adsorbent material (1d).

The vessel (1) wherein 30% of the volume of the middle tubular vessel part (1c) is filled with inert solid material (1e) can operate at a higher temperature of the inert gaseous purge (4) during the desorption phase, resulting in a cyclic capacity of 144 mmol $CO_2$/kg adsorbent material (1d), *i.e.* 25.92 mmol of $CO_2$ can be removed per cycle. The vessel (1) wherein no inert solid material (1e) is applied can only operate at a lower temperature of the inert gaseous purge (4) during the desorption phase, resulting in a cyclic capacity of 121 mmol $CO_2$/kg adsorbent material (1d), *i.e.* 39.93 mmol of $CO_2$ can be removed per cycle. Accordingly, with 54.5 wt% of the particulate solid adsorbent material (1d) and 45.5 wt% inert solid material (1e) being present, 64.9% of the cyclic capacity (in kg removed $CO_2$/cycle) of a vessel fully filled with particulate solid adsorbent material (1d) can be reached. Since the particulate solid adsorbent material (1d) is typically more expensive and more prone to degradation than the inert solid material (1e), it is more cost effective to replace part of the particulate solid adsorbent material (1d) with inert solid material (1e) and apply a bigger vessel (1) to realize a similar cyclic capacity (in kg removed $CO_2$/cycle).

It was further shown from the overall temperature variations at thermocouple T2 during the different cycli that the heat absorbed by the inert solid material (1e) during the adsorption phase, due to the high thermal conductivity of the inert solid material (1e), was effectively used during the endothermic desorption reaction in the desorption phase.

It is believed that a similar process performed continuously in two or more vessels (1) that are operated in parallel, meaning that while one or more vessels are in adsorption mode, one or more further vessels are in desorption mode and after some time, the roles of the vessels are switched, also results in an overall improvement of the cyclic capacity, because being able to considerably increase the temperature of the inert gaseous purge (4) during desorption while not exceeding the degradation temperature of the particulate solid adsorbent material (1d) results in a more complete desorption within the time frame of the adsorption step.

**Claims**

1. A swing adsorption process for separating $CO_2$ from a gas feed mixture, wherein the process comprises the following order of steps:

    (a) providing a tubular vessel (1) being divided into two or more tubular vessel parts (1c) in an axial direction of the tubular vessel (1), wherein the tubular vessel (1) has a feed input end (1a) and a product output end (1b), wherein at least one tubular vessel part (1c) comprises a particulate solid adsorbent material (1d) selective for adsorbing $CO_2$;
    (b) providing a gas feed mixture (2) comprising at least 7 mol% $CO_2$;
    (c) introducing the gas feed mixture (2) provided in step (b) into the vessel (1) via feed input end (1a) and subjecting the gas feed mixture (2) to an adsorption step by contacting the gas feed mixture (2) with the particulate solid adsorbent material (1d) to provide a gas mixture depleted in $CO_2$ (3), wherein the adsorption step is performed at a first pressure within a first pressure range and at a first temperature within a first temperature range;
    (d) releasing the gas mixture depleted in $CO_2$ (3) from vessel (1) via the product output end (1b);
    (e) introducing an inert gaseous purge (4) into the vessel (1) via (A) feed input end (1a) or via (B) product output end (1b) and subjecting the particulate solid adsorbent material (1d) to a desorption step to provide an inert gaseous purge enriched in $CO_2$ (5), wherein the desorption step is performed at a second pressure within a second pressure range and at a second temperature within a second temperature range; and
    (f) releasing the inert gaseous purge enriched in $CO_2$ (5) from the vessel (1) via (A) the product output end (1b) or via (B) the feed input end (1a);

    **characterized in that** a mixture comprising:

    • the particulate solid adsorbent material (1d); and
    • an inert solid material (1e) having an isobaric volumetric heat capacity at 25 °C of

    at least 2 $J\cdot cm^{-3}\cdot K^{-1}$ and a thermal conductivity at 25 °C of at least 10 $W\cdot m^{-1}\cdot K^{-1}$, substantially fills at least one tubular vessel part (1c).

2. Swing adsorption process according to claim 1, wherein the inert gaseous purge (4) introduced into the vessel (1) in step (e) is air.

3. Swing adsorption process according to claim 1 or 2, wherein the gas feed mixture (2) provided in step (b) is biogas, preferably biogas comprising 20 - 55 mol% of $CO_2$, more preferably biogas comprising 25 - 50 mol% of $CO_2$, even more preferably biogas comprising 30 - 45 mol% of $CO_2$.

4. Swing adsorption process according to any one of claims 1 - 3, wherein the particulate solid adsorbent material (1d) selective for adsorbing $CO_2$ is chosen from the group consisting of zeolites, all-silica microporous solids, aluminium phosphates, covalent organic frameworks (COFs), activated carbons, metal-organic frameworks (MOFs), amine-functionalised porous structures and combinations thereof, wherein the particulate solid adsorbent material (1d) selective for adsorbing $CO_2$ preferably is an amine-functionalised porous structure.

5. Swing adsorption process according to any one of claims 1 - 4, wherein at least one tubular vessel part (1c):

    (i) is empty; or
    (ii) does not comprise the particulate solid adsorbent material (1d); or
    (iii) does not comprise the solid adsorbent material (1d) but does comprise a random column packing; or
    (iv) only contains a random column packing.

6. Swing adsorption process according to any one of claims 1-5, wherein the volume ratio of the particulate solid adsorbent material (1d) to the inert solid material (1e) in the at least one tubular vessel part (1c) is between 100:1 and 1:2, preferably between 50:1 and 1:1, more preferably between 10:1 and 3:1.

7. Swing adsorption process according to any one of claims 1-6, wherein the at least one tubular vessel part (1c) that is substantially filled with the mixture comprising the particulate solid adsorbent material (1d) and the inert solid material (1e) constitutes between 75 and 100 % of the total volume of the tubular vessel (1), preferably between 80 and 100 %, such as between 85 and 100 %, between 90 and 100 % or between 95 and 100%.

8. Swing adsorption process according to any one of claims 1-7, wherein at least 80 wt.% of the mixture comprising the particulate solid adsorbent material (1d) and the inert solid material (1e) consists of the particulate solid adsorbent material (1d) and the inert solid material (1e), based on the weight of the mixture, preferably at least 85 wt.%, more preferably at least 90 wt.%, such as at least 95 wt% or at least 99 wt.%.

9. Swing adsorption process according to any one of claims 1 - 8, wherein the inert solid material (1e):

   (i) is a particulate material, preferably beads with a diameter between 0.5 and 10 mm; or
   (ii) is a sheet-like material; or
   (iii) is a combination of a particulate material, preferably beads with a diameter between 0.5 and 10 mm, and a sheet-like material.

10. Swing adsorption process according to any one of claims 1 - 9, wherein the inert solid material (1e) is chosen from the group consisting of steel, stainless steel, aluminium, copper and combinations thereof.

11. Swing adsorption process according to any one of claims 1 - 10, wherein the $CO_2$-concentraton in the gas mixture depleted in $CO_2$ (3) is 20 % lower than in the gas feed mixture (2), preferably 30 % lower, more preferably 40 % lower, such as 50 % lower, 60 % lower, 70 % lower, 80 % lower or 90 % lower.

12. Swing adsorption process according to any one of claims 1 - 11, wherein the process is simultaneously, and preferably continuously, performed in two or more vessels (1) that are operated in parallel, meaning that while one or more vessels are in adsorption mode, one or more further vessels are in desorption and after some time, the roles of the vessels are switched.

13. Tubular vessel (1) being divided into two or more tubular vessel parts (1c) in an axial direction of the tubular vessel (1), wherein the tubular vessel (1) has a feed input end (1a) and a product output end (1b), wherein a mixture comprising:

   • a particulate solid adsorbent material (1d) selective for adsorbing $CO_2$; and
   • an inert solid material (1e) having an isobaric volumetric heat capacity at 25 °C of

   at least 2 J·cm$^{-3}$·K$^{-1}$ and a thermal conductivity at 25 °C of at least 10 W·m$^{-1}$·K$^{-1}$, substantially fills at least one tubular vessel part (1c).

14. Tubular vessel (1) according to claim 13, wherein at least one tubular vessel part (1c):

   (i) is empty; or
   (ii) does not comprise the particulate solid adsorbent material (1d); or
   (v) does not comprise the solid adsorbent material (1d) but does comprise a random column packing; or
   (vi) only contains a random column packing.

15. Tubular vessel (1) according to claim 13 or 14, wherein the volume ratio of the particulate solid adsorbent material (1d) to the inert solid material (1e) in the at least one tubular vessel part (1c) is between 100:1 and 1:2, preferably between 50:1 and 1:1, more preferably between 10:1 and 3:1.

## Fig. 1

Percentage CO₂ in initial gas feed

## Fig. 2A

**Fig. 2B**

**Fig. 3A**

**Fig. 3B**

## Fig. 4

## Fig. 5

# EUROPEAN SEARCH REPORT

**Application Number**

EP 24 17 6254

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/314246 A1 (DECKMAN HARRY W [US] ET AL) 25 December 2008 (2008-12-25) * figures 2-4,9 * * paragraphs [0044], [0049], [0053], [0060], [0074], [0089], [0094] * ----- | 1-15 | INV. B01D53/04 B01D53/047 |
| X | EP 0 904 825 A2 (BOC GROUP INC [US]) 31 March 1999 (1999-03-31) * example 5 * * paragraphs [0019], [0020] * ----- | 1-15 | |
| A | US 9 126 138 B2 (DECKMAN HARRY W [US]; KAMAKOTI PREETI [US] ET AL.) 8 September 2015 (2015-09-08) * figures 4,6 * * column 9, lines 46-52 * * column 14, lines 1-4,15-41 * * column 17, lines 31-44 * ----- | 1-15 | |
| A | FR 2 891 160 A1 (AIR LIQUIDE [FR]) 30 March 2007 (2007-03-30) * page 7, lines 11-14 * * page 11, lines 5-13 * * page 12, lines 1-3 * * page 20, lines 24-26 * ----- | 1-15 | **TECHNICAL FIELDS SEARCHED (IPC)** B01D |

The present search report has been drawn up for all claims

| Place of search | Date of completion of the search | Examiner |
|---|---|---|
| Munich | 8 November 2024 | Harf, Julien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 6254

This annex lists the patent family members relating to the patent documents cited in the above-mentioned European search report.
The members are as contained in the European Patent Office EDP file on
The European Patent Office is in no way liable for these particulars which are merely given for the purpose of information.

08-11-2024

| Patent document cited in search report | | | Publication date | Patent family member(s) | | Publication date |
|---|---|---|---|---|---|---|
| US 2008314246 | A1 | | 25-12-2008 | AU | 2008254516 A1 | 27-11-2008 |
| | | | | AU | 2008254535 A1 | 27-11-2008 |
| | | | | AU | 2008254961 A1 | 27-11-2008 |
| | | | | CA | 2688545 A1 | 27-11-2008 |
| | | | | CA | 2688636 A1 | 27-11-2008 |
| | | | | CA | 2688638 A1 | 27-11-2008 |
| | | | | EA | 200970976 A1 | 30-04-2010 |
| | | | | EA | 200970978 A1 | 30-04-2010 |
| | | | | EA | 200970979 A1 | 30-04-2010 |
| | | | | EP | 2164600 A1 | 24-03-2010 |
| | | | | EP | 2164602 A1 | 24-03-2010 |
| | | | | EP | 2164603 A1 | 24-03-2010 |
| | | | | JP | 5346926 B2 | 20-11-2013 |
| | | | | JP | 5401447 B2 | 29-01-2014 |
| | | | | JP | 5544288 B2 | 09-07-2014 |
| | | | | JP | 2010527754 A | 19-08-2010 |
| | | | | JP | 2010527756 A | 19-08-2010 |
| | | | | JP | 2010527757 A | 19-08-2010 |
| | | | | US | 2008282888 A1 | 20-11-2008 |
| | | | | US | 2008314244 A1 | 25-12-2008 |
| | | | | US | 2008314246 A1 | 25-12-2008 |
| | | | | WO | 2008143964 A1 | 27-11-2008 |
| | | | | WO | 2008143967 A1 | 27-11-2008 |
| | | | | WO | 2008143968 A1 | 27-11-2008 |
| EP 0904825 | A2 | | 31-03-1999 | AU | 8308198 A | 22-04-1999 |
| | | | | EP | 0904825 A2 | 31-03-1999 |
| | | | | JP | H11156137 A | 15-06-1999 |
| | | | | ZA | 987966 B | 22-02-1999 |
| US 9126138 | B2 | | 08-09-2015 | AU | 2009241530 A1 | 05-11-2009 |
| | | | | BR | PI0911224 A2 | 29-09-2015 |
| | | | | CA | 2721724 A1 | 05-11-2009 |
| | | | | EA | 201071255 A1 | 29-04-2011 |
| | | | | EP | 2276550 A1 | 26-01-2011 |
| | | | | EP | 3144050 A1 | 22-03-2017 |
| | | | | JP | 5577324 B2 | 20-08-2014 |
| | | | | JP | 2011521773 A | 28-07-2011 |
| | | | | MY | 158840 A | 15-11-2016 |
| | | | | SG | 189782 A1 | 31-05-2013 |
| | | | | US | 2011031103 A1 | 10-02-2011 |
| | | | | US | 2015328578 A1 | 19-11-2015 |
| | | | | WO | 2009134543 A1 | 05-11-2009 |
| FR 2891160 | A1 | | 30-03-2007 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20090199709 A1
- WO 2015053619 A1
- US 20100288126 A1
- US 20130118350 A1
- WO 2017087385 A1

### Non-patent literature cited in the description

- **D.W. GREEN** ; **M.Z. SOUTHARD**. Perry's Chemical Engineers' Handbook. McGraw Hill Education, 16-43
- **S. CHOI et al.** *ChemSusChem*, 2009, vol. 2, 796-854
- **N. HEDIN et al.** *Nanoscale*, 2010, vol. 2, 1819-1841
- **P. BOLLINI et al.** *J. Mater. Chem.*, 2011, vol. 21, 15100-15120